# EUROPEAN PATENT APPLICATION

(11) **EP 4 552 489 A1**
(43) Date of publication of application: **14.05.2025**
(21) Application number: 24199765.9
(22) Date of filing: 11.09.2024
(51) Int. Cl.: A01K 5/01, A01K 7/00

(54) **PET-POWER BELL-BOWL**

(30) Priority: 08.11.2023 US 202318388169
(62) Divisional of application: 24075002.6
(71) Applicant: Hicks, Anton, Torquay TQ2 5TN (GB)
(72) Inventor: Hicks, Anton, Torquay TQ2 5TN (GB)

(57) **Abstract**

This invention empowers pets by helping them stay hydrated through a simple yet innovative mechanism. It features a lever attached to the rim of a pet bowl, operated by the pet, causing a bell to ring underneath the rim. The lever is connected to a shaft located on the bowl's rim, and when activated, an attached bolt under it swings the bell. The bell's weight ensures the lever quickly returns to its original position. This system enables pets to signal their need for food or water, reducing dehydration risks, and fostering a unique form of communication between pet and owner. Pets can easily be trained to use this push-pull system.

## Description

### FIELD OF THE INVENTION

This invention is a pet hydration and communication system that allows pets to actively communicate their thirst to owners. The invention is a pet bowl with a lever or see-saw button which, when thirsty, the pet operates to ring a bell or sound a gong to call the owner.

### BACKGROUND OF THE INVENTION

The background description includes information that is useful in understanding the present invention. It's no admission that the information provided herein is prior art.

Over the last 4 years, YouTube and Meta has shown dogs, cats, even pet pigs ringing bells to request food with millions of views and overwhelmingly positive comments (from heart emojis, to admiration, to recognising the bond between owner and pet is being enhanced). And I have videos of someone's dog picking up, bringing and loudly dropping an empty food bowl, and a cat rocking her empty steel bowl - both on tiled kitchen floors - to summon owners. This is the nearest I've found to pets requesting food or water via bowls.

The environmental impact of meat-rich wet pet food is thought to cause eight times more emissions than dry food. The Guardian in November 2022 discussed the carbon footprint of pets. So, pet owners are slowly switching to drier food. This trend, plus hotter weather, and our increasingly distracted lifestyles, means there is a need to tackle pet dehydration.

I recall being constantly reminded by my father as a child to ensure my dog had water. And 40 years later, I had remind my own family members to attend to our pet's hydration needs. Often pets can't communicate their needs. Hence, the conception of a solution.

While searching for existing products on Amazon, Alibaba and Walmart, megastores like Petco and Petsmart, as well as the UK's IPO, USPTO, Espacenet, and searches like PQAI, no product similar to the Pet-Power Bell-Bowl was found. The closest bowl-results found had mechanisms to notify the owner when the bowl is empty(ing) or when it's time for a pet to be fed. Sophisticated as some of these are, they cater just for the owner. However, in the last 3 or 4 months I've seen several double bowls with a reception-type bell set atop centre. But no *single* bowl considers the pet's direct communication - for food or water from a bowl. The Pet-Power Bell-Bowl caters for either. So, like glass mirrors were invented in 1835, and cars in 1886 - yet patents protect the value of mirrors / reflectors on and in cars - there is physical and psychological pet-&-owner-shared value in my bell being on and in (the rim of) a bowl.

### BRIEF DESCRIPTION OF DRAWINGS

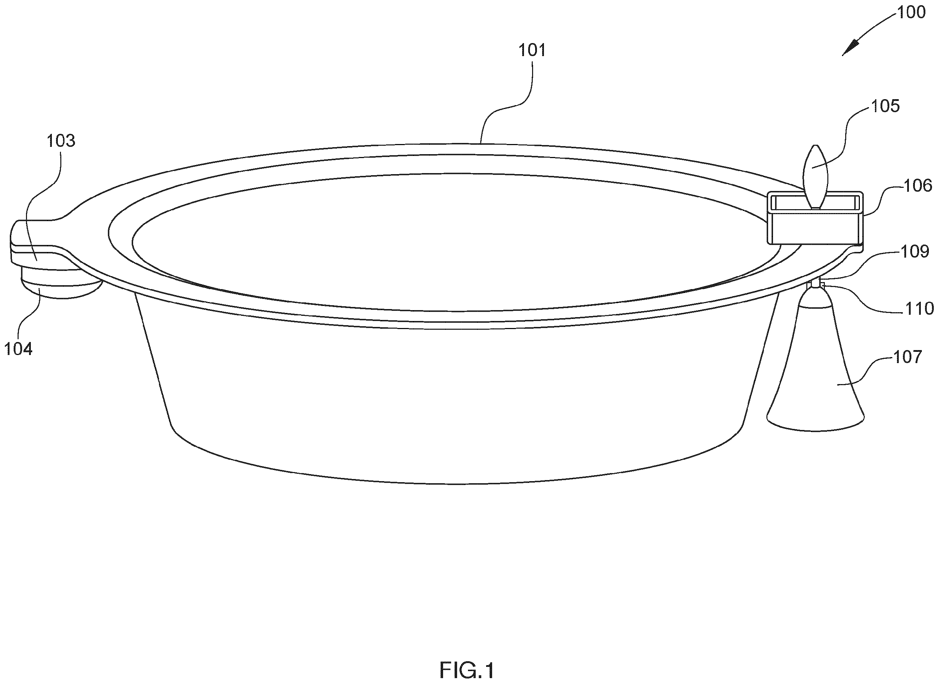

FIG.1 illustrates a side-top view of the Pet-Power Bell-Bowl, in accordance with an embodiment of the present disclosure.

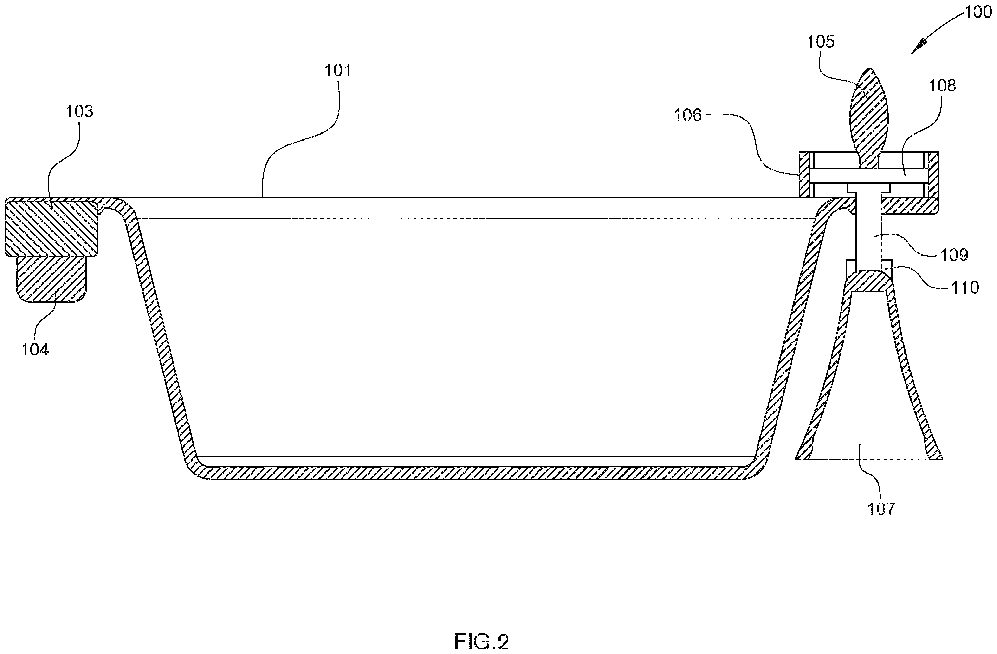

FIG.2 is a cross-sectional view of the Pet-Power Bell-Bowl illustrating especially the lever, shaft and bolt inside the bracket in similar accordance. FIG.2 can accompany a published abstract.

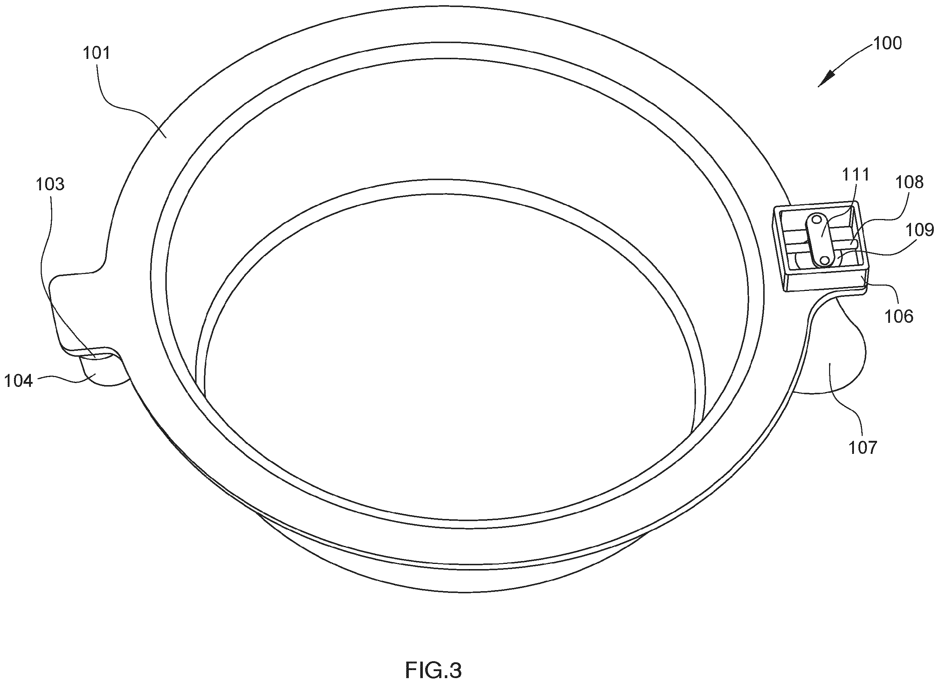

FIG.3 illustrates a top view of the Pet-Power Bell-Bowl with the seesaw button in situ.

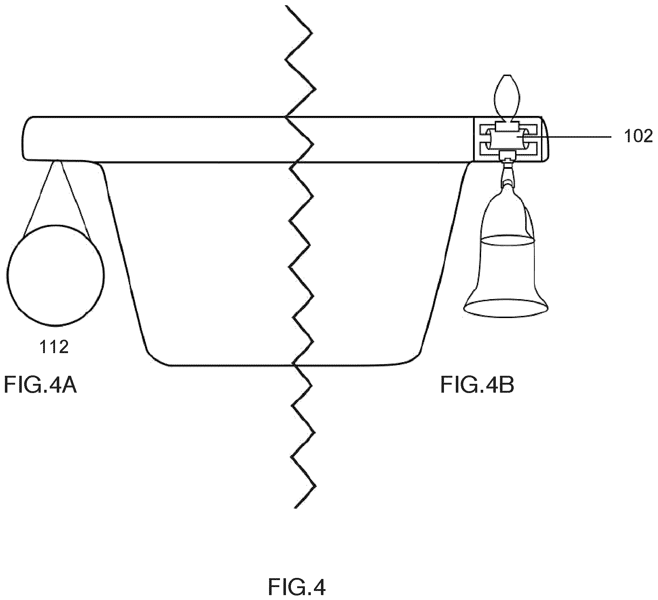

FIG.4 illustrates two design options of the Pet-Power Bell-Bowl, in similar accordance.
FIG.4A shows a tam-tam of the gong option in accordance with an embodiment of the present disclosure. FIG.4B shows use of a cylinder in similar accordance. (In reality, the cylinder mechanism would be on the surface, not the side, of the rim.) If the shaft is part of the rim (para 29), then a cylinder is necessary. But, if the shaft is inside a bracket atop the rim (para 17), it is not.

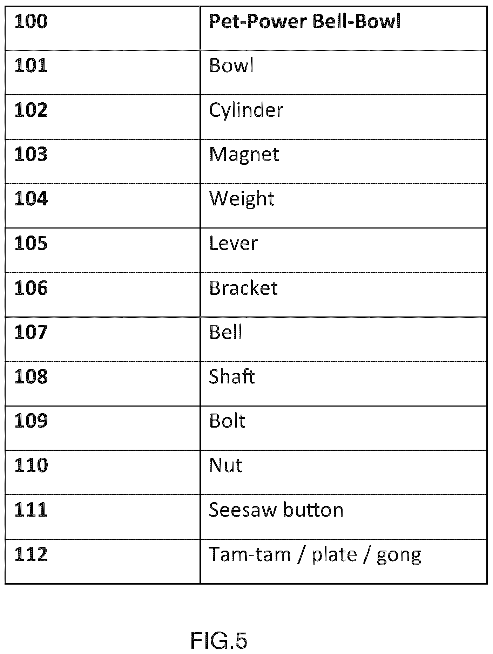

FIG.5 is a list of the components (and embodiments) of the Pet-Power Bell-Bowl.

Elements in the drawings may not be to scale. They show only details pertinent to understanding the embodiments of the invention so as not to obscure the drawings with details apparent to those of ordinary skill in the art having benefit of the descriptions. And in the language about to be used, no limitation of the scope of the invention is thereby intended.

### DESCRIPTION OF INVENTION

This pet bowl features a lever or see-saw button positioned on the rim of the bowl. A shaft, securely located within a bevel-edged bracket atop the bowl's rim, is fixed to this lever. When a pet pushes or pulls it, a bell located beneath the rim chimes, alerting the owner.

This invention includes a bracket or frame affixed to the rim of the pet bowl. The attachment can be by, for instance, welding or with right-angled brackets. If the latter, one side is affixed to the primary bracket, the other side is anchored to the bowl itself.

In an embodiment, the lever is securely affixed to the shaft, possibly by welding. To maintain smooth, noise-free operation, the shaft can be lubricated with grease or graphite.

At the centre of the bracket, a hole in the rim is created, serving as the anchor point for a swinging bolt. When the pet pushes or pulls the lever, it instigates the movement of the shaft, which, in turn, causes the attached bolt to swing. The movement (pivoting, turning, swivelling) will be about a quarter way round. This bolt is fastened to a bell positioned beneath the rim. The bell is designed with a - perhaps welded on - firmly affixed deep nut.

The invention offers the option of providing both large and small bells, each equipped with fixed nuts of the same size. This uniformity simplifies adjusting the 'volume' of the bell. By holding the large bell itself, it can be screwed onto the bolt, creating a louder and more resonant sound. Conversely, the bell can be unscrewed, and replaced with a smaller bell.

In an embodiment, there is no screw-in bell-size-option, but a fixed (medium-size) one.

In an embodiment, the material selection for the Pet-Power Bell-Bowl offers versatility. It could be brass, (recycled) plastic or stainless steel. For a customised experience, the bowl could be crafted from stone, albeit at a higher cost. Stone adds an aesthetic dimension. A 'spiritual' buyer might order a stone bowl with (para 24) a gong.

Both dogs and cats see yellow and blue. So, a blue drop-shaped lever is suggested. The rounded shape eliminates sharp edges. The lever would likely be hollow plastic or hollow steel to save on materials and be lighter, helping the lever's swift return to verticality after being pushed or pulled. (If a bell-bowl is used for food, the lever could be cats' and dogs' other colour, yellow.)

Ensuring the bowl's stability, a magnet or hook on the opposite side of the bowl holds a supplied weight in place. This will match the weight of either the large or the small bell.

The lever, 105, whose effects could also be created by a see-saw button 111, is the central component that the pet interacts with to ring the bell, 107. The lever, easily movable by the pet's paw or nose, will make the shaft, 108, turn. The bracket 106 is securely attached to the rim of the bowl, the bracket holds and protects the shaft and its two joins (of lever and bolt). The bolt, 109, is fixed to the shaft and swings - rings - the bell when the lever is moved. The nut, 110, is affixed to the bell, fastening the bolt in place to ensure a tight connection between it and the bell. The bell, 107, beneath the bowl's rim, rings when the pet activates the lever.

After food and drink, a really smart pet might be trained to ring the bell twice when he needs to go outside, or three times when he's in the mood for a specific bone or toy.

In an embodiment, the Pet-Power Gong.com is the same mechanism, but without a bell. An elongated bolt or rod becomes the gong's mallet. A rubber ball, aluminium, hard wood, or any wash- or wipe-able material suitable for use as a gong head can be employed. The gong head is known as a 'hammer,' just as a 'hammer' from outside (sometimes called a 'clapper' inside) strikes any bell.

The size and softness of the gong head are adaptable to the dimensions of the gong itself. With a smaller gong, a smaller and firmer hammer may be employed. A larger gong would be paired with a larger and softer hammer for optimal sound quality and resonance.

Of the three types of gong, this specific type is akin to a 'suspended gong', which is a flat, circular disc of metal hung vertically usually using strong cord threaded through holes near the top rim of the disc. (This disc can be known as a tam-tam.) A hook, fixed onto the underside of the rim, is a possible anchor point for the cord. It allows the part of the tam-tam to be struck to hang at/near the location where a hammer would strike a medium-sized bell.

In an embodiment of the Pet-Power Bell-Bowl or Pet-Power Gong, the lever is replaced by a long, preferably oval, flat button situated within the bracket. The button is centrally affixed atop the shaft and bisected underneath by the shaft itself. Much like the fulcrum of a seesaw, the shaft serves as the pivot point for the button. In the case of this button, the fulcrum isn't anchored to the ground, as seen in some children's seesaws, but instead is attached to the switch within the bracket. When a pet pushes down on one end of the bisected button, it causes the other end to rise, turning the shaft. This moves the shaft exactly as the lever does.

In an embodiment, of the Pet-Power Bell-Bowl or Pet-Power Gong.com, a cylinder is introduced around the shaft. The shaft remains fixed in place, while the cylinder is responsible for movement. A bolt is securely affixed to the underside of the cylinder, much like the original design, where the bolt was attached directly to the shaft. So, the utility and result are the same.

However, the cylinder is an additional moving part which brings a risk of the shaft or cylinder becoming loose or developing a rattling noise which could be both annoying to all. Moreover, food particles, saliva, and dirt could fall into this alternative mechanism.

A simplified embodiment for the Pet-Power Bell-Bowl or Gong-Bowl envisions no bracket at all. A strip of the bowl's rim serves as the central shaft. This means creating a narrow cut-out on the rim, for example a 1 cm by 1 cm square, with a strip of rim material left in the middle of the bisected square around which a (this time, essential) cylinder is placed. All else is the same.

However, the shaft-strip, would need to be relatively thick to withstand the forces involved, especially from an inadvertent or playful downward press. Rounding the strip to enable the cylinder to swivel could weaken the structure. So, the entire bowl, or at least its rim, would need to be doubly or triply thick from the outset to ensure sufficient strength... possible but heavy, expensive, and ugly.

Another point of consideration is the attachment of the bell to the system. Rather than using a fixed bolt, the simplified design suggests using fasteners like a key-ring or hook, which are undoable. While this offers some flexibility, there's the possibility that the hook may slide around within the bell's clip without effectively moving the bell. In such cases, the side-to-side forces would be absorbed by the hook and clip, rather than being transmitted to the bell itself.

In the context of the Pet-Power Bell-Bowl's patent specification, a brief introduction referencing Ivan Pavlov's classical conditioning experiments and its relevance to pet behaviour is provided. I wanted to show you what I hope to show manufacturers or investors.

### POSSIBLE INSTRUCTIONS

From your school biology class, you may remember the 19^{th} century Russian, Pavlov. When his assistant rang a bell and fed the dogs, they salivated. Soon, just hearing the assistant coming, they salivated without the bell or food. Pavlov had conditioned them. Now, your pet conditions you! When he or she rings, you come. Let's call him Bruno. The Pet-Power Bell-Bowl can be used for water or food. Does Bruno have dried food? Do the kids forget to check the water bowl? Imagine you've just enjoyed Bombay Mix, beef jerky and crisps but no drink, and you don't know how to ask. Imagine that all summer's day. It's discomfort leading to danger. So, let's do Bruno's water. For food, the training's similar but use a new bowl. SETUP: Ensure the bowl is where Bruno usually has water. Screw on his size bell. ENCOURAGE INTERACTION: Let Bruno approach the bowl to explore it alone for a while. POSITIVE REINFORCEMENT: Place Bruno's paw or nose gently on the lever. If unsure which paw, just know that male cats and dogs usually use their left paw; females, their right. (And the lever's blue - our nearest colour to water - one of the colours cats, dogs and birds see.) BELL RINGING: Guide Bruno to do the same action on the lever that he usually does for getting your attention. When the bell rings, say "Good boy." Immediately put water or 'his' drink in the bowl. Bruno watches your reactions. If you don't act "immediately," you're already doing something else, & - as far as Bruno knows - you're reacting to that. Confusing! So, remember Pavlov. Give Bruno a simple association: "Dry bowl, I ring, human fills." REINFORCE: Repeat process a few times over 2 or 3 days to establish the association. Don't completely fill a large bowl in each time, then you can return soon. Once he's trained, fill it. ADDRESSING OVERUSE: If Bruno starts to ring the bell excessively or just for attention, look at the bowl, look at him, calmly say "No," turn your back, and immediately resume your activity. And there's another association or bit of conditioning: "Rejection if I abuse human!" If you have to leave Bruno alone for a long day - which is not a very nice thing to do to a social animal like a dog - at least ensure he has access to water. Treat Bruno and his bell right, then a new level of trust and communication will develop between you. Experts keep telling us not to forget to have enough water. Now, Bruno won't let you forget to water him.

## Claims

1. A pet hydration or feeding device, comprising:
a. pet bowl;
b. an actuation device affixed on a shaft or a cylinder around it;
c. the shaft to turn within a bracket on the bowl's rim;
d. a bolt affixed under the shaft, or the cylinder around it, going through the rim to hold a bell that may be changeable;
e. a counterbalancing weight held, for example, by a magnet or hook attached to the rim diametrically across from the bell.

2. The hydration device of claim 1, **characterised in that** the bracket is replaced by a smoothed strip of the bowl's thickened rim around which a cylinder rotates.

3. The hydration device of claim 1, **characterised in that** the bell is replaced which allows the bolt to be elongated to become a gong's mallet whose hammer strikes the metal plate of the gong suspended nearby from the bowl's rim.

## Amended claims

### Amended claims in accordance with Rule 137(2) EPC.

1. A pet hydration or feeding device comprising:
a. pet bowl (101);
b. a bracket (106) affixed to the rim of the bowl, with a shaft (108) within the bracket to turn within the bracket;
c. an actuation device (105, 111) affixed on the shaft;
d. a bolt (110) affixed under the shaft, the bolt going through a hole in the rim, and fastened to a percussive device (107), that may be changeable, positioned below the rim;
e. and a counterbalancing weight (104) held by a magnet (103) or hook attached to the rim diametrically across from the percussive device.

2. The pet hydration device of claim 1, wherein, instead of the actuator atop and the bolt beneath being fixed to the turning shaft, the shaft is immovable, and around it a rotatable cylinder (102) is fixed to the actuator and bolt.

3. The pet hydration device of claim 1, wherein the shaft alone, or the shaft with the rotatable cylinder around it, is replaced by a cylinder able to rotate about a fixed shaft formed by cutting part of the rim of the bowl.
